# FASCICULE DE BREVET EUROPEEN

(11) **EP 4 045 211 B1**
(45) Date de publication et mention de la délivrance du brevet: **10.07.2024**
(21) Numéro de dépôt: 19850810.3
(22) Date de dépôt: 14.10.2019
(51) Int. Cl.: B22F 3/105, B33Y 10/00, B33Y 30/00, B22F 10/28, B22F 10/30, B22F 12/53, B22F 12/57

(54) **MACHINE DE FABRICATION ADDITIVE COMPRENANT UNE DISTRIBUTION DE POUDRE MOBILE ET REGULEE**
ADDITIVE HERSTELLUNGSMASCHINE MIT MOBILER UND REGULIERTER PULVERABGABE
ADDITIVE MANUFACTURING MACHINE COMPRISING A MOBILE AND REGULATED POWDER DISPENSING

(43) Date de publication de la demande: 24.08.2022
(73) Titulaire: AddUp, 63118 Cébazat (FR)
(72) Inventeur: EFFERNELLI, Albin, 63118 Cebazat (FR); CARLAVAN, Cédric, 63118 Cebazat (FR)
(74) Mandataire: Barascou, Frédéric
(86) Numéro de dépôt international: PCT/FR2019/052431
(87) Numéro de publication internationale: WO 2020/089538

(56) Documents cités:
- US-A- 5 647 931
- US-A1- 2013 089 642
- US-A1- 2017 057 161
- US-A1- 2017 252 817

## Description

L'invention est relative à une machine de fabrication additive mettant en oeuvre un procédé de fabrication additive à base de poudre par fusion des grains de cette poudre à l'aide d'un ou plusieurs faisceaux.

Plus précisément, l'invention se situe dans le domaine de la fabrication additive par dépôt de lit de poudre et elle vise à optimiser le dépôt d'un cordon de poudre devant le dispositif permettant d'étaler la poudre sur la zone de travail d'une machine de fabrication additive par dépôt de lit de poudre.

Le brevet US5647931 décrit une machine de fabrication additive par dépôt de lit de poudre dans lequel un container de distribution de poudre est utilisé pour étaler de la poudre sur une zone de travail. A cet effet, le container peut se déplacer en translation au-dessus de la zone de travail, et des réservoirs de poudre permettant d'alimenter le container sont prévus de part et d'autre de la zone de travail. Plus en détail, le container s'étend dans toute la largeur de la zone de travail et il délivre progressivement la poudre en se déplaçant au-dessus de cette zone de travail grâce à une mise en vibrations du container. La partie inférieure du container est munie de lames permettant de lisser et de compacter la poudre au fur et à mesure de son dépôt sur la zone de travail. Ainsi, le container de distribution de poudre fait aussi office de dispositif d'étalement de poudre.

Selon un premier inconvénient, le container de distribution décrit dans ce brevet US5647931 ne permet ni de déposer un cordon de poudre de profil et de longueur variables dans la largeur de la zone de travail, ni de déposer de la poudre de manière discontinue dans la largeur de la zone de travail. Par conséquent, ce container de distribution ne permet pas d'ajuster la quantité de poudre déposée à la géométrie de la ou des pièces fabriquées ou à la forme de la zone de travail. Par exemple, avec le container de distribution décrit dans ce brevet US5647931, si la zone de travail a un contour circulaire, une quantité importante de poudre sera inutilement déposée de part et d'autre de la partie centrale de la zone de travail.

Selon un autre inconvénient, le brevet US5647931 ne prévoit pas de moyens permettant d'adapter le container de distribution de poudre à différentes poudres de fabrication additive ayant différentes granulométries et/ou ayant différentes coulabilités.

La demande WO2017108867 décrit une machine de fabrication additive par dépôt de lit de poudre comprenant un dispositif permettant de déposer un cordon de poudre de profil variable devant le dispositif permettant d'étaler la poudre sur une zone de travail.

Plus en détail, la machine décrite dans la demande WO2017108867 comprend au moins un injecteur pour injecter directement de la poudre sur une surface de travail de la machine, cet injecteur étant mobile par rapport à la surface de travail selon au moins une direction horizontale transversale. De plus, cette machine comprend aussi un système de régulation de la quantité de poudre distribuée par l'injecteur.

Selon cette demande WO2017108867, la régulation de la quantité de poudre distribuée par l'injecteur peut être effectuée en régulant la hauteur de l'injecteur par rapport à la surface de travail. A cet effet, l'injecteur est monté mobile par rapport à la surface de travail selon une direction verticale, et le système de régulation permet de régler la position verticale de l'injecteur par rapport à la surface de travail.

Selon un inconvénient, le système de régulation décrit dans la demande WO2017108867 ne permet pas d'effectuer un dépôt discontinu de poudre sur la surface de travail. De plus, avec le système de régulation décrit dans la demande WO2017108867, l'injecteur ne peut être déplacé sans déposer de poudre sur la surface de travail, ce qui ne permet pas d'adapter la quantité de poudre déposée à la forme du plateau.

Selon d'autres inconvénients, l'injecteur décrit dans cette demande WO2017108867 ne permet de connaître ni la quantité exacte de poudre déposée, ni le profil du cordon de poudre déposé devant le dispositif d'étalement de poudre.

Le brevet JP4351218 décrit une machine de fabrication additive comprenant un dispositif de distribution de poudre permettant de déposer un cordon de poudre de profil variable ou discontinu dans la largeur de la zone de travail, et pouvant être adapté à la distribution de poudres ayant différentes granulométries et/ou différentes coulabilités.

A cet effet, le dispositif de distribution de poudre décrit dans le brevet JP4351218 prend la forme d'un réservoir pouvant se translater dans la longueur du dispositif d'étalement de poudre. Et ce réservoir mobile peut être équipé d'un vibrateur et/ou d'un système d'obturation empêchant la distribution de poudre.

Toutefois, le dispositif de distribution de poudre décrit dans le brevet JP4351218 ne permet de connaître ni la quantité exacte de poudre déposée, ni le profil du cordon de poudre déposé devant le dispositif d'étalement de poudre, alors que ces informations permettent de garantir la bonne qualité des pièces fabriquées.

Le document CN103738747 décrit un dispositif de distribution de poudre pour une machine de fabrication additive. Ce dispositif de distribution de poudre prend la forme d'un réservoir mobile équipé de moyens d'obturation et de deux capteurs de mesure des niveaux haut et bas de poudre dans le réservoir.

Les capteurs de niveau décrits dans le document CN103738747 donnent des informations relatives à une quantité maximale ou minimale de poudre présente à l'intérieur du réservoir mobile. Mais, ces capteurs ne permettent pas de mesurer précisément et en temps réel la quantité exacte de poudre déposée devant le dispositif d'étalement de poudre. Donc, ces capteurs ne permettent pas de connaître précisément le profil du cordon de poudre déposé devant le dispositif d'étalement de poudre. Les documents US 2013/089642 A1, US 2017/252817 A1, US 2017/057131 A1 divulguent également des dispositifs de fabrication additive comprenant une distribution mobile et régulée.

La présente invention a pour objectif de fournir un dispositif de distribution de poudre capable de déposer un cordon de poudre de profil variable ou discontinu devant le dispositif d'étalement de poudre et de collecter des informations relatives à la quantité de poudre déposée pour la réalisation de chaque couche de poudre.

A cet effet, l'invention a pour objet une machine de fabrication additive par dépôt de lit de poudre selon la revendication 1.

Selon l'invention, le réservoir du dispositif de distribution de poudre est monté sur un capteur de pesage.

Grâce au point de distribution de poudre et à la mobilité du réservoir, le dispositif de distribution permet une distribution localisée de poudre. De plus, l'association du réservoir mobile et de son point de distribution de poudre avec le dispositif de commande de l'écoulement de poudre permet d'envisager d'une part le dépôt d'un cordon de poudre de profil variable, et d'autre part le dépôt d'un cordon de poudre discontinu. Enfin, le capteur de pesage sur lequel est monté le réservoir permet de connaître précisément et en temps réel la quantité de poudre déposée devant le dispositif d'étalement et utilisée pour la réalisation de chaque couche de poudre.

L'invention prévoit aussi que :
- le capteur de pesage est un capteur de pesage par jauge d'extensométrie,
- une buse comprenant le point de distribution de poudre est montée de manière amovible sous la partie basse du réservoir, l'ouverture formant le point de distribution de poudre se situant à l'extrémité la plus basse de la buse,
- la buse présentant une section intérieure creuse, cette section intérieure creuse diminue progressivement en se dirigeant vers le point de distribution de poudre,
- le dispositif de commande de l'écoulement de poudre comprend un vibrateur fixé au réservoir,
- le dispositif de commande de l'écoulement de poudre comprend un obturateur mobile, l'obturateur permettant d'empêcher la poudre de s'écouler par le point de distribution de poudre lorsque cet obturateur est dans une position fermée, et cet obturateur permettant à la poudre de s'écouler par le point de distribution de poudre lorsque cet obturateur est dans une position ouverte, l'obturateur prend la forme d'un clapet monté au bout d'une tige montée mobile en translation à l'intérieur du réservoir,
- lorsque l'obturateur est dans une position ouverte, le clapet est dans une position haute et il n'est pas en contact avec la partie basse du réservoir, et lorsque l'obturateur est dans une position fermée, le clapet est dans une position basse et il est en contact avec la partie basse du réservoir,
- la partie supérieure du réservoir comprend une ouverture d'alimentation permettant l'alimentation en poudre du réservoir depuis l'arrivée de poudre, et la partie supérieure du réservoir comprenant une paroi latérale, l'ouverture d'alimentation est prévue dans cette paroi latérale,
- le dispositif d'étalement prenant la forme d'une raclette ou d'un rouleau monté sur un chariot, le réservoir est monté mobile en translation sur le chariot du dispositif d'étalement de poudre,
- le réservoir peut se déplacer en translation en face avant et en face arrière du chariot,
- le dispositif de distribution de poudre comprend un dispositif de mesure sans contact du profil de la poudre déposée sur le plan de travail ou sur la zone de travail,
- le dispositif de distribution de poudre comprend plusieurs arrivées de poudre,
- le dispositif de distribution de poudre comprend plusieurs réservoirs de poudre montés mobile au-dessus du plan de travail et pouvant se déplacer jusque sous une arrivée de poudre de manière à être remplis de poudre.

L'invention concerne aussi un procédé de fabrication additive mis en oeuvre avec la machine selon l'invention.

Selon l'invention, ce procédé prévoit que :
- les déplacements d'un réservoir du dispositif de distribution de poudre sont asservis aux mesures effectuées par le capteur de pesage sur lequel est monté ce réservoir,
- les vitesses des déplacements d'un réservoir du dispositif de distribution de poudre sont asservies aux mesures effectuées par le capteur de pesage sur lequel est monté ce réservoir, et
- le fonctionnement du dispositif de commande de l'écoulement de poudre d'un réservoir du dispositif de distribution de poudre est asservi aux mesures effectuées par le capteur de pesage sur lequel est monté ce réservoir.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue de face schématique d'une machine de fabrication additive selon l'invention,
- la figure 2 est une vue de dessus schématique d'une machine de fabrication additive selon l'invention,
- la figure 3 est une vue en perspective d'un dispositif de distribution de poudre d'une machine de fabrication additive selon l'invention, et
- la figure 4 est une vue de détails en coupe du réservoir d'un dispositif de distribution de poudre d'une machine de fabrication additive selon l'invention,
- la figure 5 est une vue en coupe du réservoir d'un dispositif de distribution de poudre d'une machine de fabrication additive selon l'invention, le réservoir étant équipé d'un obturateur en position ouverte, et
- la figure 6 est une vue en coupe du réservoir d'un dispositif de distribution de poudre d'une machine de fabrication additive selon l'invention, le réservoir étant équipé d'un obturateur en position fermée.

L'invention est relative à une machine de fabrication additive par dépôt de lit de poudre. La fabrication additive par dépôt de lit de poudre est un procédé de fabrication additif dans lequel une ou plusieurs pièces sont fabriquées par la fusion sélective de différentes couches de poudre de fabrication additive superposées les unes sur les autres. La fusion peut être totale ou partielle (frittage). La fusion est dite sélective car seules des zones des couches de poudre correspondant à des sections de pièces à fabriquer sont fusionnées.

La machine selon l'invention est plus particulièrement destinée à la fabrication de pièces métalliques. Par conséquent, les moyens décrits ci-après ont particulièrement été conçus pour permettre la distribution et le dépôt de couches de poudre fabrication additive métallique. Une poudre de fabrication additive métallique comprend au moins un métal sous forme de poudre. Toutefois, une poudre de fabrication additive métallique comprend généralement plusieurs métaux sous forme de poudre, ainsi qu'éventuellement d'autres éléments ou composés chimiques.

Pour la mise en oeuvre d'une fabrication additive par dépôt de lit de poudre, la première couche de poudre est déposée sur un support tel un plateau, puis frittée ou fusionnée sélectivement à l'aide d'un ou plusieurs faisceaux selon une première section horizontale de la ou des pièces à fabriquer. Puis, une deuxième couche de poudre est déposée sur la première couche de poudre qui vient d'être fusionnée ou frittée, et cette deuxième couche de poudre est frittée ou fusionnée sélectivement à son tour, et ainsi de suite jusqu'à la dernière couche de poudre utile à la fabrication de la dernière section horizontale de la ou des pièces à fabriquer.

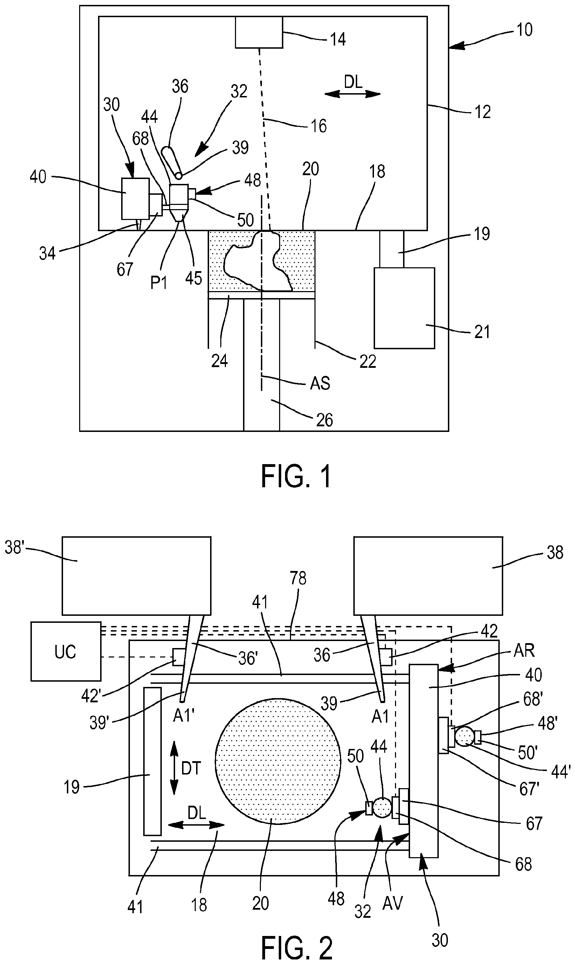

Comme l'illustre la figure 1 et afin de permettre une fabrication additive de pièces par dépôt de lit de poudre, la machine 10 de fabrication additive selon l'invention comprend un plan de travail 18 comprenant une zone de travail 20 permettant de recevoir une superposition de différentes couches de poudre, et au moins un faisceau 16 émis par au moins une source 14, ce faisceau 16 permettant de fusionner de manière sélective une couche de poudre de fabrication additive étalée sur la zone de travail 20.

Un faisceau 16 est de préférence un faisceau laser émis par une source laser. En variante, plusieurs faisceaux 16 peuvent être émis par plusieurs sources laser comme par exemple des diodes laser. Toujours en variante, un faisceau 16 peut être un faisceau d'électrons émis par un canon à électrons. Un ou des faisceaux laser peuvent aussi être associés à un ou des faisceaux d'électrons. Afin de permettre une fusion sélective d'une couche de poudre, c'est-à-dire selon des motifs et des trajectoires prédéterminés, une source 14 est associée à des moyens de déplacement et de contrôle du ou des faisceaux 16. Par exemple, des miroirs, des lentilles optiques et/ou des actionneurs mécaniques permettent de déplacer et de modifier un ou des faisceaux laser, et des bobines électromagnétiques permettent de déplacer et de contrôler un faisceau d'électron.

Le plan de travail 18 est horizontal. Une zone de travail 20 est définie par une chemise de fabrication 22 et un plateau de fabrication 24. La chemise 22 s'étend verticalement sous le plan de travail 18 et elle débouche dans le plan de travail 18. Le plateau de fabrication 24 coulisse verticalement à l'intérieur de la chemise de fabrication 22 sous l'effet d'un actionneur 26 tel un vérin. Comme illustré en figure 1, le plan de travail 18 et la chemise 22 sont montés fixes, et le plateau de fabrication 24 se déplace en translation verticale dans la chemise 22 sous l'effet du vérin 26. En variante, le plateau de fabrication 24 est monté fixe, et un ou plusieurs vérins 26 permettent de déplacer le plan de travail 18, et éventuellement la chemise 22, en translation verticale.

Afin de réaliser les différentes couches de poudre utiles à la fabrication additive de la ou des pièces à fabriquer, la machine de fabrication additive comprend un dispositif de distribution de poudre 32 permettant de déposer au moins un cordon de poudre sur le plan de travail 18 et un dispositif d'étalement de poudre 30 permettant d'étaler un cordon de poudre déposé par le dispositif de distribution sur une zone de travail 20.

Le dispositif d'étalement 30 prend la forme d'une raclette 34 ou d'un rouleau monté sur un chariot 40. Ce chariot 40 est monté mobile en translation dans une direction horizontale longitudinale DL au-dessus du plan de travail 18 et d'au moins une zone de travail 20. La direction horizontale longitudinale DL est parallèle au plan de travail 18 et elle s'étend dans la longueur du plan de travail 18, c'est-à-dire dans sa plus grande dimension dans un plan horizontal. Comme illustré par la figure 2, le chariot 40 est par exemple monté sur des rails 41 via des galets ou des patins. Afin d'être entraîné en translation dans la direction horizontale longitudinale DL, le chariot 40 comprend de préférence une motorisation embarquée. Alternativement, le chariot 40 peut être mis en mouvement par un moteur non embarqué et monté fixe dans la machine 10, via un système de transmission de mouvement tels des poulies et une courroie.

La poudre étant déposée en excès devant le dispositif d'étalement 30, au moins une rainure 19 est prévue dans le plan de travail 18 pour récupérer l'excédent de poudre. Cette rainure 19 est reliée à un réservoir 21 de récupération de poudre prévu sous le plan de travail 18.

Pour fabriquer des pièces de révolution ou améliorer la résistance mécanique de la chemise de fabrication 22 au vide en vue d'une fabrication additive par faisceau d'électrons, la chemise de fabrication 22 peut être cylindrique. Dans ce cas, la zone de travail 20 est circulaire, comme l'illustre la figure 2.

Pour son alimentation en poudre de fabrication additive, le dispositif de distribution de poudre 32 comprend au moins une arrivée de poudre 36 permettant de délivrer de la poudre au-dessus du plan de travail 18.

Une arrivée de poudre 36 prend la forme d'une goulotte ou d'un tube relié à un réservoir principal 38 de poudre. Une arrivée de poudre 36 est de préférence montée fixe au-dessus du plan de travail 18. En variante, une arrivée de poudre 36 peut aussi être montée mobile au-dessus du plan de travail 18. L'extrémité libre 39 de l'arrivée de poudre 36 forme un point d'alimentation en poudre A1 au-dessus du plan de travail 18. Avantageusement, une arrivée de poudre 36 est inclinée par rapport à un plan horizontal afin que la poudre s'écoule par gravité dans l'arrivée de poudre 36. En complément, une arrivée de poudre 36 peut être équipée d'un dispositif 42 permettant de contrôler le débit de poudre délivré par le point d'alimentation A1. Ce dispositif de contrôle de débit 42 peut être un dispositif vibrant et/ou un dispositif à clapet.

Selon l'invention, le dispositif de distribution de poudre 32 comprend au moins un réservoir 44 de poudre monté mobile au-dessus du plan de travail 18 et pouvant se déplacer jusque sous l'arrivée de poudre 36 de manière à être rempli de poudre. Plus précisément, un réservoir 44 peut se positionner sous le point d'alimentation en poudre A1 formé par l'extrémité libre 39 d'une arrivée de poudre 36.

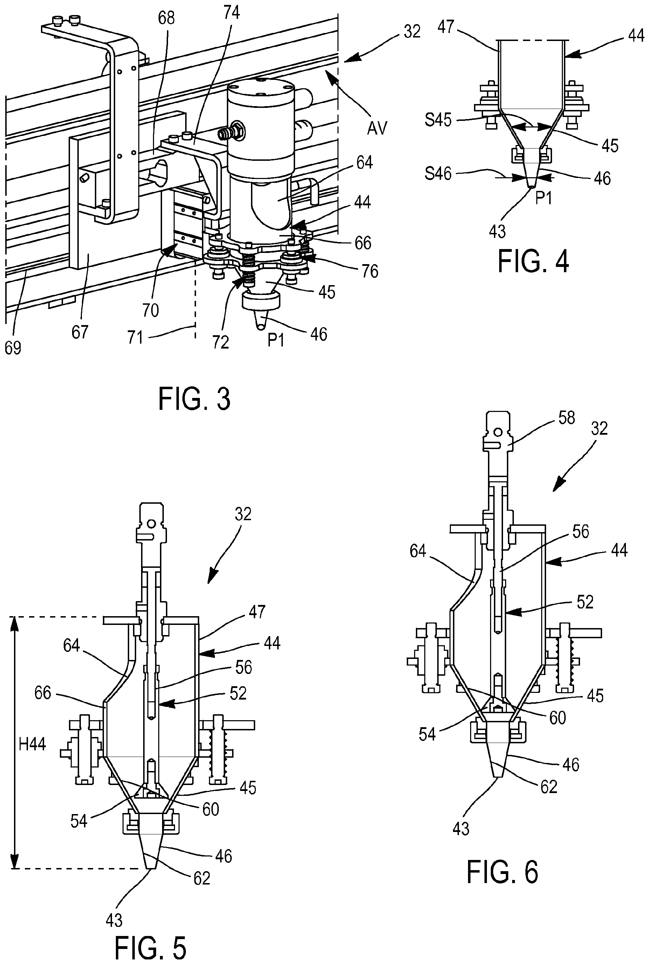

En vue d'une distribution de poudre par gravité, la partie basse 45 d'un réservoir 44 comprend un point de distribution de poudre P1. Ce point de distribution de poudre P1 prend la forme d'une ouverture 43 prévue dans la partie basse 45 du réservoir 44. Cette ouverture 43 se situe à l'extrémité la plus basse du réservoir 44, comme l'illustre la figure 4.

Un réservoir 44 contient une quantité de poudre dépendante de la surface de la zone de travail. Idéalement, la quantité de poudre contenue dans un réservoir 44 est suffisante pour réaliser au moins une couche de poudre sur la zone de travail 20. Il peut être prévu de réalimenter en poudre un réservoir 44 entre chaque mise en couche de poudre. A cet effet, le réservoir 44 vient se positionner entre chaque mise en couche de poudre sous l'extrémité libre 39 de l'arrivée de poudre 36. Il peut aussi être prévu que le réservoir 44 contienne une quantité de poudre suffisante pour réaliser plusieurs couches de poudre et même toutes les couches de poudre nécessaires à la fabrication de la ou des pièces à fabriquer.

Afin de permettre la dépose d'un cordon de poudre de profil variable ou discontinu, le dispositif de distribution de poudre 32 comprend un dispositif de commande 48 de l'écoulement de poudre via le point de distribution de poudre P1 pendant un déplacement du réservoir.

Selon l'invention, ce dispositif de commande 48 de l'écoulement de poudre peut comprendre un vibrateur 50 fixé au réservoir 44. Le vibrateur 50 est de préférence de type pneumatique. Le vibrateur 50 est mobile avec le réservoir 44. L'utilisation de vibrations permet de contrôler le débit de poudre délivré via le point de distribution de poudre P1 car les grains de certaines poudres de fabrication additive tendent à former des voûtes dans le récipient qui les contient. L'apparition de ces voûtes est due à la faible granulométrie, de l'ordre de quelques dizaines de micromètres, des poudres de fabrication additive, notamment métalliques. Ainsi, lorsque aucune vibration n'est appliquée au réservoir 44, la poudre qu'il contient forme une voûte en amont du point de distribution de poudre P1 et la poudre ne s'écoule pas au travers du point de distribution de poudre P1. Afin que la poudre s'écoule par le point de distribution de poudre P1, des vibrations sont appliquées au réservoir 44. Ces vibrations permettent de casser les voûtes de poudre qui peuvent se former dans le réservoir 44. Les vibrations favorisent aussi l'écoulement de la poudre via le point de distribution de poudre P1.

Afin de favoriser l'apparition de voûtes de poudre dans le réservoir 44 et comme l'illustre la figure 4, la section intérieure S45 creuse de la partie basse 45 du réservoir 44 diminue progressivement en se dirigeant vers le point de distribution de poudre P1. De préférence, la section intérieure S45 creuse de la partie basse 45 du réservoir 44 a une forme tronconique.

La partie haute 47 du réservoir, située au-dessus de la partie basse 45, est de préférence cylindrique.

Avantageusement et comme l'illustre la figure 3, une buse 46 comprenant le point de distribution de poudre P1 est montée de manière amovible, de préférence à l'aide d'un pas de vis, sous la partie basse 45 du réservoir 44. Ainsi, différentes buses 46 peuvent être montées sous le réservoir 44 afin d'adapter le dispositif de distribution de poudre 32 à différentes poudres de fabrication additive ayant différentes granulométries. Par exemple, plus la coulabilité de la poudre à distribuer est faible, plus la section intérieure S46 de la buse qui sera montée sur le réservoir sera importante. Lorsque le réservoir est équipé d'une buse 46, cette buse fait partie de la partie basse 45 du réservoir, et l'ouverture 43 formant le point de distribution de poudre P1 se situe à l'extrémité la plus basse de la buse 46.

Afin de favoriser l'apparition de voûtes de poudre dans la buse et comme l'illustre la figure 4, la section intérieure S46 creuse de la buse 46 diminue progressivement en se dirigeant vers le point de distribution de poudre P1. De préférence, la section intérieure S46 creuse de la buse 46 a une forme tronconique.

Il existe certaines poudres de fabrication additive qui ont une coulabilité importante, c'est-à-dire qui s'écoulent facilement, et qui ne tendent pas à former des voûtes dans le récipient qui les contient. Pour stopper l'écoulement de telles poudres, le dispositif de commande 48 de l'écoulement de poudre peut comprendre un obturateur mobile 52. Comme l'illustre la figure 6, cet obturateur 52 permet d'empêcher la poudre de s'écouler par le point de distribution de poudre P1, c'est-à-dire par l'ouverture 43, lorsque cet obturateur est dans une position fermée. Et comme l'illustre la figure 5, cet obturateur 52 permet à la poudre de s'écouler par le point de distribution de poudre P1, c'est-à-dire par l'ouverture 43, lorsque cet obturateur est dans une position ouverte.

L'obturateur 52 prend la forme d'un clapet 54 monté au bout d'une tige 56 mobile en translation. Le clapet 54 est conique et monté tête en bas, c'est-à-dire avec sa plus grande section en-dessous de sa plus petite section. La tige est montée mobile en translation à l'intérieur du réservoir 44. La tige s'étend dans la hauteur H44 du réservoir. La tige 56 est mobile en translation dans une direction verticale. La tige 56 est de préférence mise en mouvement par un actionneur pneumatique 58 de type vérin double action.

Lorsque l'obturateur 52 est dans une position ouverte, le clapet 54 est dans une position haute et il n'est pas en contact avec la paroi interne 60 de la partie basse 45 du réservoir, ou avec la paroi interne 62 de la buse 46 lorsqu'une buse est montée sous le réservoir. Lorsque l'obturateur 52 est dans une position fermée, le clapet 54 est dans une position basse et il est en contact avec la paroi interne 60 de la partie basse du réservoir, ou avec la paroi interne 62 de la buse lorsqu'une buse est montée sous le réservoir.

En modifiant la position haute du clapet 54 correspondant à la position ouverte du clapet 54, il est possible d'adapter au mieux le fonctionnement du dispositif de commande 48 de l'écoulement de poudre à la granulométrie et à la coulabilité de la poudre à distribuer.

Afin de rendre le dispositif de distribution de poudre 32 compatible avec de nombreuses poudres de différentes granulométries et de différentes coulabilités, le réservoir 44 peut être équipé d'un vibrateur 50 et d'un obturateur mobile 52.

Comme le montrent les figures 3, 5 et 6, le réservoir 44 comprend une ouverture d'alimentation 64. Cette ouverture d'alimentation 64 permet l'alimentation en poudre du réservoir depuis l'arrivée de poudre 36. La partie supérieure 47 du réservoir comprenant une paroi latérale 66, l'ouverture d'alimentation 64 est prévue dans cette paroi latérale 66 du réservoir 44. Pour l'alimentation en poudre du réservoir, le réservoir est déplacé jusque sous l'arrivée de poudre 36, de manière à ce que l'extrémité libre 39 de l'arrivée de poudre 36 pénètre dans le réservoir 44 via l'ouverture d'alimentation 64.

Afin d'être mobile au-dessus du plan de travail 18, de pouvoir se déplacer jusque sous l'arrivée de poudre 36 et de pouvoir déposer un cordon de poudre devant le dispositif d'étalement de poudre 30 , le réservoir 44 est monté mobile en translation au-dessus du plan de travail 18 et dans une direction transversale DT perpendiculaire à l'axe de superposition AS des couches de poudre sur la zone de travail 20. L'axe de superposition des couches AS est l'axe suivant lequel les couches sont superposées les unes sur les autres. Cet axe de superposition AS est perpendiculaire au plan de chaque couche de poudre. Le plan de chaque couche de poudre et le plan de travail 18 étant des plans horizontaux, l'axe de superposition AS est vertical. De préférence, la raclette 34 ou le rouleau du dispositif d'étalement de poudre 30 s'étendent dans la direction transversale DT dans laquelle le réservoir peut se translater.

Afin de pouvoir délivrer de la poudre en tout point de la zone de travail 20 ou en tout point du plan de travail 18 situé autour de la zone de travail, le réservoir 44 est aussi monté mobile en translation dans une direction longitudinale DL perpendiculaire à l'axe de superposition AS des couches de poudre sur la zone de travail 20 et perpendiculaire à la direction transversale DT. De préférence, la direction longitudinale DL dans laquelle se déplace le chariot 40 du dispositif d'étalement de poudre 30 est aussi la direction longitudinale DL dans laquelle le réservoir peut se translater.

En étant mobile à la fois dans la direction transversale DT et dans la direction longitudinale DL, le réservoir 44 permet d'effectuer des dépôts localisés de poudre en tout point de la zone de travail 20, ce qui permet de limiter la quantité de poudre utilisée, notamment lorsqu'il s'agit d'une poudre de fabrication additive contenant un métal précieux. Cela permet aussi de déposer la poudre au plus près de la zone de travail 20.

Le montage du réservoir 44 sur le chariot 40 du dispositif d'étalement de poudre 30 permet d'obtenir la mobilité en translation du réservoir 44 dans la direction longitudinale DL, ce chariot se déplaçant dans cette direction longitudinale DL.

Pour obtenir le déplacement du réservoir dans la direction transversale DT, le réservoir 44 est monté mobile en translation dans la direction transversale DT sur le chariot 40 du dispositif d'étalement de poudre 30. A cet effet, le chariot 40 comprend une navette 67 et des moyens de guidage et d'entrainement en translation 69 de la navette dans la direction transversale DT. Le réservoir est monté sur la navette 67. Les moyens de guidage et d'entrainement en translation 69 de la navette 67 par rapport au chariot 40 comprennent par exemple un rail et une courroie reliée à la navette et entraînée par un moteur via une poulie, la navette étant montée sur le rail via des galets rotatifs.

Avantageusement, et par exemple pour éviter des allers-retours inutiles du chariot 40 de part et d'autre de la zone de travail, le réservoir 44 peut se déplacer en translation dans la direction transversale DT en face avant AV et en face arrière AR du chariot 40. A cet effet, les moyens de guidage et d'entrainement en translation 69 sont prévus en face avant AV et en face arrière AR du chariot 40. Ainsi, quelle que soit la position du chariot 40 par rapport à la zone de travail, le réservoir 44 permet toujours de déposer un cordon de poudre entre la raclette 34 ou le rouleau monté sur le chariot 40 et la zone de travail 20.

En faisant varier la vitesse de déplacement du réservoir 44 dans la direction transversale DT, il est possible de déposer un cordon de poudre de profil variable dans la direction transversale DT sur le plan de travail 18. En faisant varier la vitesse de déplacement du réservoir 44 dans la direction longitudinale DL, il est possible de déposer un cordon de poudre de profil variable dans la direction longitudinale DL sur le plan de travail. Par exemple, il peut être utile d'augmenter la quantité de poudre déposée devant le dispositif d'étalement 30 en face des zones fusionnées de la précédente couche de poudre car ces zones fusionnées se situent légèrement en retrait des zones de cette couche de poudre qui ne sont pas fusionnées.

En déplaçant le clapet 54 de l'obturateur mobile 52 et/ou en appliquant ou pas des vibrations à l'aide du vibrateur 50 lorsque le réservoir se déplace dans la direction transversale DT et/ou dans la direction longitudinale DL, il est possible de déposer un cordon de poudre de profil discontinu dans la direction transversale DT et/ou dans la direction longitudinale DL sur le plan de travail. Par exemple, il peut être utile de déposer des cordons de longueur réduite et de manière localisée en fin de fabrication dans le cas où la ou les pièces n'occupent plus toute la surface de la zone de travail en fin de fabrication.

Afin de connaître la quantité exacte de poudre déposée via le point de distribution de poudre P1 et comme l'illustre la figure 3, le réservoir 44 est monté sur un capteur de pesage 68. Le capteur de pesage 68 permet de mesurer la masse du réservoir et de la poudre qu'il contient. Lorsque la poudre est délivrée via le point de distribution de poudre P1, le capteur de pesage 68 permet de mesurer la diminution de la masse de poudre présente dans le réservoir, et donc la quantité de poudre délivrée. Eventuellement, le capteur de pesage peut aussi être utilisé pour mesurer les variations du débit de poudre en mesurant les variations de la masse de poudre présente dans le réservoir 44 au cours du temps. Avantageusement, le capteur de pesage 68 permet de détecter un arrêt de l'écoulement de poudre ou une diminution anormale du débit de poudre, par exemple dû à la formation d'un bouchon de poudre dans le réservoir. Le capteur de pesage 68 permet de détecter les résidus de poudre qui peuvent s'accumuler dans le réservoir 44 au fur et à mesure des cycles de fabrication. Le capteur de pesage 68 permet d'éviter un remplissage excessif du réservoir 44 si de la poudre est encore présente dans le réservoir lorsque celui-ci se présente sous l'arrivée de poudre 36.

Avantageusement, le fonctionnement du dispositif de contrôle de débit 42 d'une arrivée de poudre 36 est piloté grâce aux mesures effectuées par le capteur de pesage 68. A cet effet, la machine comprend une unité de contrôle UC reliée au capteur de pesage 68 et au dispositif 42 de contrôle de débit. Les déplacements du réservoir 44, et donc du chariot 40, sont aussi pilotés à partir des mesures effectuées par le capteur de pesage 68. En permettant de piloter à la fois l'approvisionnement en poudre et la distribution de poudre, le capteur de pesage 68 permet de simplifier le fonctionnement du dispositif de distribution de poudre 32.

Le capteur de pesage 68 est par exemple un capteur de pesage à jauge d'extensométrie. Ce capteur de pesage 68 prend par exemple la forme d'un bras monté en flexion et équipé d'une jauge d'extensométrie.

Dans le cas où le réservoir 44 est monté sur le chariot 40 du dispositif d'étalement de poudre 30 via la navette 67, le capteur de pesage 68 relie le réservoir 44 à la navette 67. Avantageusement, les vibrations du vibrateur 50 ne perturbent pas les mesures effectuées par le capteur de pesage 68.

Afin de connaître le profil du cordon de poudre déposé devant le dispositif d'étalement de poudre, notamment lorsqu'un cordon de poudre de profil variable est déposé devant le dispositif d'étalement de poudre, le dispositif de distribution de poudre 32 comprend un dispositif de mesure sans contact 70 du profil de la poudre déposée sur le plan de travail 18 ou sur la zone de travail 20. Ce dispositif de mesure sans contact 70 prend de préférence la forme d'un profilomètre laser utilisant un faisceau laser 71 pour mesurer le profil du cordon de poudre déposé devant le dispositif d'étalement 30. Ce dispositif de mesure sans contact 70 est par exemple utilisé de manière occasionnelle pour étalonner le dispositif de distribution de poudre 32.

Dans le cas où le réservoir 44 est monté sur le chariot 40 du dispositif d'étalement de poudre 30 via une navette 67, ce dispositif de mesure sans contact 70 est monté sur la navette 67.

Afin d'éviter la propagation des vibrations émises par le vibrateur 50 vers les autres composants du dispositif de distribution 32 et de manière plus générale vers les autres composants de la machine, le réservoir 44 est monté sur des suspensions 72.

Dans le cas où le réservoir 44 est monté sur un capteur de pesage 68, un support 74 est monté sur capteur de pesage 68, et les suspensions 72 relient le réservoir 44 au support 74.

En parallèle des suspensions 72, des éléments de guidage 76 relient le réservoir 44 au support 74.

De préférence, les composants du dispositif de distribution de poudre 32 qui sont emmenés à être en contact avec des grains de poudre sont réalisés dans un matériau inoxydable, comme par exemple un acier inoxydable.

Idéalement, le point de distribution de poudre P1 se situe entre 5 et 10 millimètres au-dessus du sommet du cordon de poudre déposé. Cette hauteur de distribution permet de limiter les projections de poudre.

Dans le cas où la machine de fabrication additive 10 comprend une surface de réception de poudre mobile et apte à se déplacer à proximité d'une zone de travail 20, le dispositif de distribution de poudre 32 selon l'invention et son réservoir 44 peuvent être utilisés pour déposer de la poudre sur cette surface de réception mobile.

De préférence, la machine de fabrication additive 10 comprend une enceinte de fabrication 12 qui est une enceinte fermée. Dans ce cas, le plan de travail 18, la zone de travail 20, le dispositif d'étalement de poudre 30 et le dispositif de distribution de poudre 32 selon l'invention se situent dans cette enceinte de fabrication 12. Le réservoir principal 38 de poudre se situe à l'extérieur de l'enceinte de fabrication 12 et l'arrivée de poudre 36 traverse une paroi 78 de l'enceinte de fabrication. Le réservoir 44 se déplace dans cette enceinte de fabrication 12.

Pendant un cycle de fabrication, l'enceinte de fabrication 12 peut être remplie avec un gaz inerte tel l'azote pour éviter d'oxyder la poudre de fabrication additive et/ou pour éviter les risques d'explosion. L'enceinte de fabrication 12 peut être maintenue en légère surpression pour éviter les entrées d'oxygène, ou maintenue sous vide lorsqu'un faisceau d'électrons est utilisé à l'intérieur de l'enceinte pour fritter ou fusionner la poudre.

Afin de permettre la fabrication d'une même pièce avec différents matériaux et donc à partir de différentes poudres de fabrication additive, le dispositif de distribution de poudre 32 peut comprendre plusieurs arrivées de poudre 36,36', comme le montre la figure 2. Les différentes arrivées de poudre 36,36' peuvent délivrer différentes poudres au-dessus du plan de travail 18 pour la fabrication d'une même pièce avec différents matériaux, ou bien une même poudre de part et d'autre de la zone de travail afin d'améliorer la productivité de la machine. Le réservoir 44 peut se déplacer jusque sous les différentes arrivées de poudres 36,36'. Les différentes arrivées de poudre 36,36' sont reliées à différents réservoirs principaux 38,38', contenant des poudres différentes ou une poudre identique. Chaque arrivée de poudre 36,36' est de préférence montée fixe au-dessus du plan de travail 18. En variante, les arrivées de poudre 36,36' peuvent aussi être montées mobiles au-dessus du plan de travail 18. Les extrémités libres 39,39' des arrivées de poudre 36,36' forment des points d'alimentation en poudre A1,A1' au-dessus du plan de travail 18. Avantageusement, les arrivées de poudre 36,36' sont inclinées par rapport à un plan horizontal afin que la poudre s'écoule par gravité dans les arrivées de poudre 36,36'. En complément, chaque arrivée de poudre 36,36' peut être équipée d'un dispositif 42,42' permettant de contrôler le débit de poudre délivré par son point d'alimentation A1,A1'. Un dispositif de contrôle de débit 42,42' est relié à l'unité de contrôle UC. Un dispositif de contrôle de débit 42,42' peut être un dispositif vibrant et/ou un dispositif à clapet.

Les différentes arrivées de poudre sont par exemple disposées de part et d'autre de la zone de travail 20, comme l'illustre la figure 2. Dans ce cas, il est avantageux que le réservoir 44 puisse se déplacer en translation dans la direction transversale DT en face avant AV et en face arrière AR du chariot 40 afin d'éviter des allers-retours inutiles du chariot 40 entre les arrivées de poudre situées de part et d'autre de la zone de travail.

Pour la fabrication d'une même pièce avec différents matériaux, ou plus simplement pour réduire les temps de cycle lorsque le dispositif de distribution de poudre 32 ne comprend qu'une arrivée de poudre 36, le dispositif de distribution de poudre 32 peut comprendre plusieurs réservoirs 44,44' de poudre montés mobiles au-dessus du plan de travail 18 et pouvant se déplacer jusque sous une ou plusieurs arrivées de poudre 36,36' de manière à être rempli de poudre, comme le montre la figure 2. Dans ce cas, chaque réservoir 44,44' comprend un point de distribution de poudre, et chaque réservoir 44,44' est équipé d'un dispositif de commande 48,48' de l'écoulement de poudre via le point de distribution de poudre pendant un déplacement du réservoir. De plus, chaque réservoir 44,44' est monté sur un capteur de pesage 68,68' et sur une navette 67,67'. Les capteurs de pesage 68,68' des différents réservoirs 44,44' sont reliés à l'unité de contrôle UC.

L'invention concerne aussi un procédé de fabrication additive mis en oeuvre avec une machine 10 telle qu'elle vient d'être décrite. Selon l'invention, le procédé prévoit que les déplacements d'un réservoir 44,44' du dispositif de distribution de poudre 32 sont asservis aux mesures effectuées par le capteur de pesage 68,68' sur lequel est monté ce réservoir.

Plus précisément, les vitesses des déplacements d'un réservoir 44,44' du dispositif de distribution de poudre 32 sont asservies aux mesures effectuées par le capteur de pesage 68,68' sur lequel est monté ce réservoir, par exemple pour déposer un cordon de poudre de profil variable ou discontinu sur le plan de travail 18 ou sur une zone de travail 20 de la machine.

Parallèlement, le fonctionnement du dispositif de commande 48,48' de l'écoulement de poudre d'un réservoir 44,44' du dispositif de distribution de poudre 32 est asservi aux mesures effectuées par le capteur de pesage 68,68' sur lequel est monté ce réservoir, notamment pour déposer des cordons de poudre de manière discontinue ou localisée sur le plan de travail 18 ou sur une zone de travail 20 de la machine.

## Revendications

1. Machine (10) de fabrication additive par dépôt de lit de poudre, cette machine de fabrication additive comprenant un plan de travail (18) comprenant une zone de travail (20) permettant de recevoir une superposition de différentes couches de poudre, un dispositif de distribution de poudre (32), un dispositif d'étalement de poudre (30) et un faisceau (16) émis par une source (14) et permettant de fusionner de manière sélective une couche de poudre de fabrication additive étalée sur la zone de travail, la zone de travail (20) étant définie par une chemise de fabrication (22) et un plateau de fabrication (24), la chemise (22) s'étendant verticalement sous le plan de travail (18) et débouchant dans le plan de travail (18), le plateau de fabrication (24) coulissant verticalement à l'intérieur de la chemise de fabrication (22) sous l'effet d'un actionneur (26) tel un vérin, le dispositif de distribution de poudre (32) comprenant une arrivée de poudre (36) permettant de délivrer de la poudre au-dessus du plan de travail, le dispositif de distribution de poudre (32) comprenant un réservoir (44) de poudre monté mobile au-dessus du plan de travail (18) et pouvant se déplacer jusque sous l'arrivée de poudre (36) de manière à être rempli de poudre, la partie basse (45) du réservoir (44) comprenant un point de distribution de poudre (P1), et le dispositif de distribution de poudre (32) comprenant un dispositif de commande (48) de l'écoulement de poudre via le point de distribution de poudre pendant un déplacement du réservoir, le dispositif de distribution de poudre (32) permettant de déposer au moins un cordon de poudre sur le plan de travail (18) et le dispositif d'étalement de poudre (30) permettant d'étaler un cordon de poudre déposé par le dispositif de distribution sur la zone de travail (20), le réservoir (44) étant monté sur un capteur de pesage (68), la machine (10) de fabrication additive est **caractérisée en ce que**, le dispositif d'étalement (30) prenant la forme d'une raclette (34) ou d'un rouleau monté sur un chariot (40), le réservoir (44) est monté mobile en translation sur le chariot (40) du dispositif d'étalement de poudre (30), le chariot (40) étant monté mobile en translation dans une direction horizontale longitudinale (DL) au-dessus du plan de travail (18) et d'au moins une zone de travail (20), et le réservoir (44) étant monté mobile en translation dans une direction transversale (DT) sur le chariot (40) du dispositif d'étalement de poudre (30), la direction transversale (DT) étant perpendiculaire à la direction longitudinale (DL).

2. Machine (10) de fabrication additive par dépôt de lit de poudre selon la revendication 1, dans laquelle le capteur de pesage (68) est un capteur de pesage à jauge d'extensométrie.

3. Machine (10) de fabrication additive par dépôt de lit de poudre selon l'une des revendications précédentes, dans laquelle une buse (46) comprenant le point de distribution de poudre (P1) est montée de manière amovible sous la partie basse (45) du réservoir (44), l'ouverture (43) formant le point de distribution de poudre (P1) se situant à l'extrémité la plus basse de la buse (46).

4. Machine (10) de fabrication additive par dépôt de lit de poudre selon la revendication 3, dans laquelle, la buse (46) présentant une section intérieure (S46) creuse, cette section intérieure (S46) creuse diminue progressivement en se dirigeant vers le point de distribution de poudre (P1).

5. Machine (10) de fabrication additive par dépôt de lit de poudre selon l'une des revendications précédentes, dans laquelle le dispositif de commande (48) de l'écoulement de poudre comprend un vibrateur (50) fixé au réservoir (44).

6. Machine (10) de fabrication additive par dépôt de lit de poudre selon l'une des revendications précédentes, dans laquelle le dispositif de commande (48) de l'écoulement de poudre comprend un obturateur mobile (52), l'obturateur permettant d'empêcher la poudre de s'écouler par le point de distribution de poudre (P1) lorsque cet obturateur est dans une position fermée, et cet obturateur permettant à la poudre de s'écouler par le point de distribution de poudre (P1) lorsque cet obturateur est dans une position ouverte, l'obturateur (52) prend la forme d'un clapet (54) monté au bout d'une tige (56) montée mobile en translation à l'intérieur du réservoir (44).

7. Machine (10) de fabrication additive par dépôt de lit de poudre selon la revendication 6, dans laquelle, lorsque l'obturateur (52) est dans une position ouverte, le clapet (54) est dans une position haute et il n'est pas en contact avec la partie basse (45) du réservoir, et dans laquelle, lorsque l'obturateur (52) est dans une position fermée, le clapet (54) est dans une position basse et il est en contact avec la partie basse du réservoir.

8. Machine (10) de fabrication additive par dépôt de lit de poudre selon l'une des revendications précédentes, dans laquelle, la partie supérieure du réservoir (44) comprenant une ouverture d'alimentation (64) permettant l'alimentation en poudre du réservoir depuis l'arrivée de poudre (36), et la partie supérieure (47) du réservoir comprenant une paroi latérale (66), l'ouverture d'alimentation (64) est prévue dans cette paroi latérale.

9. Machine (10) de fabrication additive par dépôt de lit de poudre selon l'une des revendications précédentes, dans laquelle le réservoir (44) peut se déplacer en translation en face avant (AV) et en face arrière (AR) du chariot (40).

10. Machine (10) de fabrication additive par dépôt de lit de poudre selon l'une des revendications précédentes, dans laquelle le dispositif de distribution de poudre (32) comprend un dispositif de mesure sans contact (70) du profil de la poudre déposée sur le plan de travail (18) ou sur la zone de travail (20).

11. Machine (10) de fabrication additive par dépôt de lit de poudre selon l'une des revendications précédentes, dans laquelle le dispositif de distribution de poudre (32) comprend plusieurs arrivées de poudre (36,36').

12. Machine (10) de fabrication additive par dépôt de lit de poudre selon l'une des revendications précédentes, dans laquelle le dispositif de distribution de poudre (32) comprend plusieurs réservoirs (44,44') de poudre montés mobile au-dessus du plan de travail (18) et pouvant se déplacer jusque sous une arrivée de poudre (36,36') de manière à être remplis de poudre.

13. Procédé de fabrication additive mis en oeuvre avec une machine (10) de fabrication additive par dépôt de lit de poudre selon l'une des revendications précédentes, le procédé étant **caractérisé en ce que** les déplacements d'un réservoir (44,44') du dispositif de distribution de poudre (32) sont asservis aux mesures effectuées par le capteur de pesage (68,68') sur lequel est monté ce réservoir.

14. Procédé de fabrication additive selon la revendication 13, dans lequel les vitesses des déplacements d'un réservoir (44,44') du dispositif de distribution de poudre (32) sont asservies aux mesures effectuées par le capteur de pesage (68,68') sur lequel est monté ce réservoir.

15. Procédé de fabrication additive selon la revendication 13 ou la revendication 14, dans lequel le fonctionnement du dispositif de commande (48,48') de l'écoulement de poudre d'un réservoir (44,44') du dispositif de distribution de poudre (32) est asservi aux mesures effectuées par le capteur de pesage (68,68') sur lequel est monté ce réservoir.

## Patentansprüche

1. Maschine (10) zur additiven Fertigung durch Aufbringen eines Pulverbetts, wobei diese Maschine zur additiven Fertigung eine Arbeitsebene (18), die einen Arbeitsbereich (20) umfasst, welcher ermöglicht, einander überlagernde verschiedene Pulverschichten aufzunehmen, eine Pulververteilungsvorrichtung (32), eine Pulverausbreitvorrichtung (30) und einen Strahl (16), der von einer Quelle (14) ausgesendet wird und ermöglicht, eine auf dem Arbeitsbereich ausgebreitete Pulverschicht zur additiven Fertigung selektiv zu schmelzen, umfasst, wobei der Arbeitsbereich (20) durch einen Fertigungsmantel (22) und eine Fertigungsplatte (24) definiert ist, wobei sich der Mantel (22) vertikal unter der Arbeitsebene (18) erstreckt und in die Arbeitsebene (18) mündet, wobei die Fertigungsplatte (24) unter der Wirkung eines Aktors (26) wie etwa eines Hubzylinders im Inneren des Fertigungsmantels (22) vertikal gleitet, wobei die Pulververteilungsvorrichtung (32) eine Pulverzuführung (36) umfasst, die es ermöglicht, Pulver oberhalb der Arbeitsebene abzugeben, wobei die Pulververteilungsvorrichtung (32) einen Pulverbehälter (44) umfasst, der beweglich oberhalb der Arbeitsebene (18) angebracht ist und sich bis unter die Pulverzuführung (36) bewegen kann, um mit Pulver gefüllt zu werden, wobei der untere Teil (45) des Behälters (44) eine Pulververteilungsstelle (P1) umfasst und die Pulververteilungsvorrichtung (32) eine Vorrichtung zur Steuerung (48) des Fließens von Pulver über die Pulververteilungsstelle während einer Bewegung des Behälters umfasst, wobei die Pulververteilungsvorrichtung (32) ermöglicht, mindestens eine Pulverraupe auf die Arbeitsebene (18) aufzubringen, und die Pulverausbreitvorrichtung (30) ermöglicht, eine von der Pulververteilungsvorrichtung aufgebrachte Pulverraupe auf dem Arbeitsbereich (20) auszubreiten, wobei der Behälter (44) auf einem Gewichtssensor (68) angebracht ist, wobei die Maschine (10) zur additiven Fertigung **dadurch gekennzeichnet ist, dass** die Ausbreitvorrichtung (30) die Form eines Schabers (34) oder einer Walze, die an einem Wagen (40) angebracht ist, aufweist, wobei der Behälter (44) translatorisch beweglich am Wagen (40) der Pulverausbreitvorrichtung (30) angebracht ist, wobei der Wagen (40) translatorisch beweglich in einer horizontalen Längsrichtung (DL) oberhalb der Arbeitsebene (18) und mindestens eines Arbeitsbereichs (20) angebracht ist und der Behälter (44) translatorisch beweglich in einer Querrichtung (DT) am Wagen (40) der Pulverausbreitvorrichtung (30) angebracht ist, wobei die Querrichtung (DT) senkrecht zur Längsrichtung (DL) ist.

2. Maschine (10) zur additiven Fertigung durch Aufbringen eines Pulverbetts nach Anspruch 1, wobei der Gewichtssensor (68) ein Dehnungsmessstreifen-Gewichtssensor ist.

3. Maschine (10) zur additiven Fertigung durch Aufbringen eines Pulverbetts nach einem der vorhergehenden Ansprüche, wobei eine Düse (46), welche die Pulververteilungsstelle (P1) umfasst, lösbar unter dem unteren Teil (45) des Behälters (44) angebracht ist, wobei sich die Öffnung (43), welche die Pulververteilungsstelle (P1) bildet, am untersten Ende der Düse (46) befindet.

4. Maschine (10) zur additiven Fertigung durch Aufbringen eines Pulverbetts nach Anspruch 3, wobei, wenn die Düse (46) einen hohlen inneren Querschnitt (S46) aufweist, dieser hohle innere Querschnitt (S46) sich zur Pulververteilungsstelle (P1) hin allmählich verkleinert.

5. Maschine (10) zur additiven Fertigung durch Aufbringen eines Pulverbetts nach einem der vorhergehenden Ansprüche, wobei die Vorrichtung zur Steuerung (48) des Fließens von Pulver eine Rüttelvorrichtung (50) umfasst, die am Behälter (44) befestigt ist.

6. Maschine (10) zur additiven Fertigung durch Aufbringen eines Pulverbetts nach einem der vorhergehenden Ansprüche, wobei die Vorrichtung zur Steuerung (48) des Fließens von Pulver ein bewegliches Verschlussstück (52) umfasst, wobei das Verschlussstück ermöglicht zu verhindern, dass das Pulver durch die Pulververteilungsstelle (P1) fließt, wenn sich dieses Verschlussstück in einer geschlossenen Position befindet, und wobei dieses Verschlussstück ermöglicht, dass das Pulver durch die Pulververteilungsstelle (P1) fließt, wenn sich dieses Verschlussstück in einer geöffneten Position befindet, wobei das Verschlussstück (52) die Form einer Klappe (54) aufweist, die am Ende einer Stange (56) angebracht ist, die translatorisch beweglich im Inneren des Behälters (44) angebracht ist.

7. Maschine (10) zur additiven Fertigung durch Aufbringen eines Pulverbetts nach Anspruch 6, wobei, wenn sich das Verschlussstück (52) in einer geöffneten Position befindet, die Klappe (54) sich in einer hohen Position befindet und nicht mit dem unteren Teil (45) des Behälters in Kontakt ist, und wobei, wenn sich das Verschlussstück (52) in einer geschlossenen Position befindet, die Klappe (54) sich in einer niedrigen Position befindet und mit dem unteren Teil des Behälters in Kontakt ist.

8. Maschine (10) zur additiven Fertigung durch Aufbringen eines Pulverbetts nach einem der vorhergehenden Ansprüche, wobei, wenn der obere Teil des Behälters (44) eine Beschickungsöffnung (64) umfasst, welche die Beschickung des Behälters mit Pulver von der Pulverzuführung (36) ermöglicht, und der obere Teil (47) des Behälters eine Seitenwand (66) umfasst, die Beschickungsöffnung (64) in dieser Seitenwand vorgesehen ist.

9. Maschine (10) zur additiven Fertigung durch Aufbringen eines Pulverbetts nach einem der vorhergehenden Ansprüche, wobei sich der Behälter (44) auf der Vorderseite (AV) und auf der Rückseite (AR) des Wagens (40) translatorisch bewegen kann.

10. Maschine (10) zur additiven Fertigung durch Aufbringen eines Pulverbetts nach einem der vorhergehenden Ansprüche, wobei die Pulververteilungsvorrichtung (32) eine Vorrichtung zur kontaktlosen Messung (70) des Profils des auf die Arbeitsebene (18) oder auf den Arbeitsbereich (20) aufgebrachten Pulvers umfasst.

11. Maschine (10) zur additiven Fertigung durch Aufbringen eines Pulverbetts nach einem der vorhergehenden Ansprüche, wobei die Pulververteilungsvorrichtung (32) mehrere Pulverzuführungen (36,36') umfasst.

12. Maschine (10) zur additiven Fertigung durch Aufbringen eines Pulverbetts nach einem der vorhergehenden Ansprüche, wobei die Pulververteilungsvorrichtung (32) mehrere Pulverbehälter (44,44') umfasst, die beweglich oberhalb der Arbeitsebene (18) angebracht sind und sich bis unter eine Pulverzuführung (36,36') bewegen können, um mit Pulver gefüllt zu werden.

13. Verfahren der additiven Fertigung, welches mit einer Maschine (10) zur additiven Fertigung durch Aufbringen eines Pulverbetts nach einem der vorhergehenden Ansprüche durchgeführt wird, wobei das Verfahren **dadurch gekennzeichnet ist, dass** die Bewegungen eines Behälters (44,44') der Pulververteilungsvorrichtung (32) den Messungen nachgeführt werden, die von dem Gewichtssensor (68,68') ausgeführt werden, an dem dieser Behälter angebracht ist.

14. Verfahren der additiven Fertigung nach Anspruch 13, wobei die Geschwindigkeiten der Bewegungen eines Behälters (44,44') der Pulververteilungsvorrichtung (32) den Messungen nachgeführt werden, die von dem Gewichtssensor (68,68') ausgeführt werden, an dem dieser Behälter angebracht ist.

15. Verfahren der additiven Fertigung nach Anspruch 13 oder Anspruch 14, wobei die Funktionsweise der Vorrichtung zur Steuerung (48,48') des Fließens von Pulver eines Behälters (44,44') der Pulververteilungsvorrichtung (32) den Messungen nachgeführt wird, die von dem Gewichtssensor (68,68') ausgeführt werden, an dem dieser Behälter angebracht ist.

## Claims

1. Powder bed deposition additive manufacturing machine (10), this additive manufacturing machine comprising a working plane (18) comprising a working zone (20) allowing an overlay of different powder layers to be received, a powder dispensing device (32), a powder spreading device (30) and a beam (16) emitted by a source (14) and making it possible to selectively fuse a layer of additive manufacturing powder spread over the working zone, the working zone (20) being defined by a manufacturing sleeve (22) and a manufacturing plate (24), the sleeve (22) extending vertically under the working plane (18) and emerging in the working plane (18), the manufacturing plate (24) sliding vertically inside the manufacturing sleeve (22) under the effect of an actuator (26) such as a power cylinder, the powder dispensing device (32) comprising a powder intake (36) allowing powder to be delivered on top of the working plane, the powder dispensing device (32) comprising a powder tank (44) movably mounted above the working plane (18) and that can be displaced to under the powder intake (36) so as to be filled with powder, the bottom part (45) of the tank (44) comprising a powder dispensing point (P1), and the powder dispensing device (32) comprising a control device (48) controlling the flow of powder via the powder dispensing point during a displacement of the tank, the powder dispensing device (32) allowing at least one bead of powder to be deposited on the working plane (18) and the powder spreading device (30) allowing a bead of powder deposited by the dispensing device to be spread over the working zone (20), the tank (44) being mounted on a weighing sensor (68), the additive manufacturing machine (10) is **characterized in that**, the spreading device (30) taking the form of a scraper (34) or of a roller mounted on a carriage (40), the tank (44) is mounted to move by translation on the carriage (40) of the powder spreading device (30), the carriage (40) being mounted to move by translation in a longitudinal horizontal direction (DL) above the working plane (18) and at least one working zone (20), and the tank (44) being mounted to move by translation in the transverse direction (DT) on the carriage (40) of the powder spreading device (30), the transversal direction (DT) being at right angles to the longitudinal direction (DL).

2. Powder bed deposition additive manufacturing machine (10) according to Claim 1, wherein the weighing sensor (68) is a strain measurement gauge weighing sensor.

3. Powder bed deposition additive manufacturing machine (10) according to one of the preceding claims, wherein a nozzle (46) comprising the powder dispensing point (P1) is removably mounted under the bottom part (45) of the tank (44), the aperture (43) forming the powder dispensing point (P1) being situated at the lowest end of the nozzle (46).

4. Powder bed deposition additive manufacturing machine (10) according to Claim 3, wherein, the nozzle (46) having a hollow internal section (S46), this hollow internal section (S46) reduces progressively towards the powder dispensing point (P1).

5. Powder bed deposition additive manufacturing machine (10) according to one of the preceding claims, wherein the control device (48) controlling the flow of powder comprises a vibrator (50) fixed to the tank (44).

6. Powder bed deposition additive manufacturing machine (10) according to one of the preceding claims, wherein the control device (48) controlling the flow of powder comprises a movable shutter (52), the shutter making it possible to prevent the powder from flowing through the powder dispensing point (P1) when this shutter is in a closed position, and this shutter allowing the powder to flow through the powder dispensing point (P1) when this shutter is in an open position, the shutter (52) takes the form of a flap valve (54) mounted at the end of a rod (56) mounted to move by translation inside the tank (44).

7. Powder bed deposition additive manufacturing machine (10) according to Claim 6, wherein, when the shutter (52) is in an open position, the flap valve (54) is in a high position and it is not in contact with the bottom part (45) of the tank, and wherein, when the shutter (52) is in a closed position, the flap valve (54) is in a low position and it is in contact with the bottom part of the tank.

8. Powder bed deposition additive manufacturing machine (10) according to one of the preceding claims, wherein, the top part of the tank (44) comprising a supply aperture (64) allowing the tank to be supplied with powder from the powder intake (36), and the top part (47) of the tank comprising a lateral wall (66), the supply aperture (64) is provided in this lateral wall.

9. Powder bed deposition additive manufacturing machine (10) according to one of the preceding claims, wherein the tank (44) can be displaced in translation on the front face (AV) and on the rear face (AR) of the carriage (40).

10. Powder bed deposition additive manufacturing machine (10) according to one of the preceding claims, wherein the powder dispensing device (32) comprises a contactless measurement device (70) for measuring the profile of the powder deposited on the working plane (18) or on the working zone (20).

11. Powder bed deposition additive manufacturing machine (10) according to one of the preceding claims, wherein the powder dispensing device (32) comprises several powder intakes (36,36').

12. Powder bed deposition additive manufacturing machine (10) according to one of the preceding claims, wherein the powder dispensing device (32) comprises several powder tanks (44,44') movably mounted above the working plane (18) and that can be displaced to under a powder intake (36,36') so as to be filled with powder.

13. Additive manufacturing method implemented by a powder bed deposition additive manufacturing machine (10) according to one of the preceding claims, the method being **characterized in that** the displacements of a tank (44,44') of the powder dispensing device (32) are servocontrolled by the measurements performed by the weighing sensor (68,68') on which this tank is mounted.

14. Additive manufacturing method according to Claim 13, wherein the speeds of displacements of a tank (44,44') of the powder dispensing device (32) are servocontrolled on the measurements performed by the weighing sensor (68,68') on which this tank is mounted.

15. Additive manufacturing method according to Claim 13 or Claim 14, wherein the operation of the control device (48,48') controlling the flow of powder from a tank (44,44') of the powder dispensing device (32) is servocontrolled on the measurements performed by the weighing sensor (68,68') on which this tank is mounted.
